# EUROPÄISCHE PATENTSCHRIFT

(11) **EP 3 501 252 B1**
(45) Veröffentlichungstag und Bekanntmachung des Hinweises auf die Patenterteilung: **22.05.2024**
(21) Anmeldenummer: 18401098.1
(22) Anmeldetag: 07.12.2018
(51) Int. Cl.: A01C 21/00, A01C 23/00, A01C 23/04, A01M 7/00

(54) **STEUER- UND/ODER REGELSYSTEM, LANDWIRTSCHAFTLICHES NUTZFAHRZEUG UND VERFAHREN ZUM STEUERN UND/ODER REGELN EINES LANDWIRTSCHAFTLICHEN NUTZFAHRZEUGS**
CONTROL AND/OR REGULATING SYSTEM, AGRICULTURAL VEHICLE AND METHOD FOR CONTROLLING AND/OR REGULATING AN AGRICULTURAL VEHICLE
SYSTÈME DE COMMANDE ET/OU DE RÉGLAGE, VÉHICULE AGRICOLE ET PROCÉDÉ DE COMMANDE ET/OU DE RÉGLAGE D'UN VÉHICULE AGRICOLE

(30) Priorität: 21.12.2017 DE 102017130845
(43) Veröffentlichungstag der Anmeldung: 26.06.2019
(73) Patentinhaber: Amazonen-Werke H. Dreyer SE & Co. KG, 49205 Hasbergen (DE)
(72) Erfinder: Klemann, Timo, 49191 Belm (DE); Heer, Jochen, 49074 Osnabrück (DE)

(56) Entgegenhaltungen:
- DE-A1-102017 104 805
- DE-U1-202009 018 464
- US-A1- 2016 175 869

## Beschreibung

Die Erfindung betrifft ein landwirtschaftliches Nutzfahrzeug gemäß dem Oberbegriff des Patentanspruchs 1 sowie ein Verfahren zum Steuern und/oder Regeln eines landwirtschaftlichen Nutzfahrzeugs gemäß dem Oberbegriff des Patentanspruchs 8.

Zum Ausbringen von Material, wie Düngemittel, Pflanzenschutzmittel oder Saatgut sind landwirtschaftliche Nutzfahrzeuge mit einem Verteilergestänge vorgesehen, wie beispielsweise in der DE 10 2017 104 805 beschrieben ist. Derartige Verteilergestänge umfassen einen Mittelteil und zwei mit dem Mittelteil verbundene Ausleger. Die Ausleger weisen zumindest einen äußeren Gestängeabschnitt und einen inneren Gestängeabschnitt auf, welche mittels Gelenken miteinander verbunden und zueinander klappbar sind. Zusätzlich können derartige Ausleger einen oder mehrere mittleren Gestängeabschnitte aufweisen, welche zwischen dem äußeren und dem inneren Gestängeabschnitt angeordnet und mit diesen sowie miteinander gelenkig verbunden sind.

Gattungsgemäße Verteilergestänge weisen eine Transportstellung und eine Arbeitsstellung auf, zwischen welchen sie verbringbar sind. In der Arbeitsstellung erstreckt sich das Verteilergestänge quer zur Vortriebsrichtung und kann dabei eine Arbeitsbreite von bis zu 50m erreichen.

Bei derart großen Abmessungen ist es zur Anpassung der Arbeitsbreite an die Erfordernisse eines aktuellen Ausbringvorgangs, hervorgerufen beispielsweise durch die Geometrie der zu bearbeitenden Fläche und/oder durch Hindernisse, üblich, das Verteilergestänge teilweise einzuklappen, um eine Teilbreiten-Arbeitsposition zu erreichen. Dazu wird ein Gestängeabschnitt oder mehrere Gestängeabschnitte in eine zu den übrigen Gestängeabschnitten parallele Position gebracht.

Es sind Sensoren vorgesehen, welche den Klappzustand der Ausleger erfassen und mit einer Datenverarbeitungseinheit verbunden sind. Die Sensoren stellen fest, ob sich ein Gestängeabschnitt in einer teilweise eingeklappten Position befindet. Die Datenverarbeitungseinheit ist dazu eingerichtet, die Ausbringung der einzelnen Gestängeabschnitte abhängig vom Klappzustand des Auslegers in geeigneter Weise zu aktivieren oder zu stoppen.

Nachteilig dabei ist, dass die auf diese Weise erreichbaren Teilbreiten-Arbeitspositionen davon abhängen, welche Gestängeabschnitte in eine zu den übrigen Gestängeabschnitten parallele Position eingeklappt werden können. Zudem hängen die erreichbaren Teilbreiten-Arbeitspositionen von den Abmessungen der Gestängeabschnitte ab. Somit lassen sich nur wenige, diskrete Teilbreiten-Arbeitspositionen erreichen, welche sich zudem in den erreichbaren Teilarbeitsbreiten um mehrere Meter unterscheiden können. Zusätzlich ist es lediglich möglich, die Ausbringung eines Gestängeabschnitts bzw. bestenfalls einzelner Düsen zu aktivieren oder zu stoppen.

Aufgrund dieser Nachteile weisen die bisher bekannten Lösungen nicht die notwendige Flexibilität auf, um auf Erfordernisse eines Ausbringvorgangs reagieren zu können. Somit sind Ertragseinbußen bewirkende Fehlapplikationen durch ungewollte Überlappungen oder Auslassungen äußerst wahrscheinlich.

Der Erfindung liegt daher die Aufgabe zugrunde, ein Steuer- und/oder Regelsystem für ein landwirtschaftliches Nutzfahrzeug bereitzustellen, welches die genannten Nachteile überwindet und eine flexible Einstellung der Arbeitsbreite sowie eine Optimierung des Ausbringvorgangs gestattet.

Eine Feststellung von Positionen einzelner Gestängeabschnitte zueinander offenbart die US 2016 0 175 869 A1.

Eine weitere Aufgabe der Erfindung besteht darin, ein landwirtschaftliches Nutzfahrzeug mit einem erfindungsgemäßen Steuer- und/oder Regelsystem bereitzustellen.

Ferner liegt die Aufgabe der Erfindung in der Bereitstellung eines Verfahrens zum Steuern und /oder Regeln eines landwirtschaftlichen Nutzfahrzeugs.

Die Aufgabe wird gelöst durch den Gegenstand des Anspruchs 1.

Durch diese Maßnahme wird in vorteilhafter Weise über die Ventile eine Steuerung der Ausbringmenge in Abhängigkeit von den tatsächlichen Arbeitspositionen der Gestängeabschnitte des Verteilergestänges, also in Abhängigkeit der Positionen und/oder Klappstellungen der Gestängeabschnitte des Verteilergestänges, erreicht.

Die tatsächlichen Arbeitspositionen der Gestängeabschnitte des Verteilergestänges umfassen dabei neben den Standardpositionen, in welchen sämtliche Gestängeabschnitte im Wesentlichen quer zur Fahrtrichtung ausgerichtet sind, weitere Positionen, welche von den Standardpositionen abweichen und nicht der eingeklappten Transportposition entsprechen. Entsprechend den Erfordernissen eines aktuellen Ausbringvorgangs kann das Verteilergestänge Sonderstellungen einnehmen, in welchen die Gestängeabschnitte des Verteilergestänges Sonderpositionen aufweisen.

Eine Sonderstellung liegt beispielsweise vor, wenn eine Kollision eines Gestängeabschnitts mit einem Hindernis droht und/oder erfolgt und zur Vermeidung einer Beschädigung des Verteilergestänges der betreffende Ausleger und/oder Gestängeabschnitt verschwenkt.

Eine weitere Sonderstellung liegt beispielsweise vor, wenn zur Anpassung der Arbeitsbreite Ausleger und/oder Gestängeabschnitte verschwenken. Dies kann beispielsweise durch geeignete, dem Verteilergestänge zugeordnete Stellmittel erfolgen. Durch ein Verschwenken von Auslegern und/oder Gestängeabschnitten kann die Arbeitsbreite kontinuierlich variiert werden, wodurch in vorteilhafter Weise eine hochgenaue Anpassung der Arbeitsbreite erfolgen kann.

Es können einzelne Gestängeabschnitte, mehrere Gestängeabschnitte und/oder die gesamten Ausleger in eine Sonderstellung verbracht werden. Erfindungsgemäß weisen dabei die Gestängeabschnitte eines Auslegers jeweils zueinander und/oder die Ausleger jeweils zueinander relative Winkel auf. Durch die bekannte Anordnung der Düsen am Verteilergestänge und die Erfassung der Positionen und/oder Klappstellungen der Gestängeabschnitte des Verteilergestänges durch Erfassungsmittel sind die Absolutpositionen der Düsen bezüglich des Nutzfahrzeugs zu jeder Zeit bestimmbar.

Die Erfassungsmittel sind als Sensoren ausgebildet, welche die Positionen und/oder Klappstellungen der Gestängeabschnitte des Verteilergestänges erfassen können. Bevorzugt sind die Erfassungsmittel im Grenzbereich zwischen zwei benachbarten Gestängeabschnitten und/oder zwischen einem Mittelteil des Verteilergestänges und einem benachbarten Gestängeabschnitt angeordnet. In besonders bevorzugter Weise ist jedem Grenzbereich ein Erfassungsmittel zugeordnet.

Die Erfassungsmittel sind vorzugsweise als Potentiometer, insbesondere als Linearpotentiometer oder Drehpotentiometer ausgebildet.

In alternativer Ausführung können die Erfassungsmittel auch optisch und/oder bildgebend ausgebildet sein.

In bevorzugter Weise ermitteln die Erfassungsmittel Positionsabweichungen und/oder Winkelabweichungen von Referenzwerten. Die Referenzwerte können beispielsweise durch die Positionen und/oder die Klappstellungen der Gestängeabschnitte des Verteilergestänges bei vollständig ausgeklappter Arbeitsstellung des Verteilergestänges definiert sein.

Wird durch eine an dem Verteilergestänge angeordnete Düse Material ausgebracht, formt sich in an sich bekannter Weise ein Sprühfächer aus. Die Geometrie des Sprühfächers hängt dabei beispielsweise von der Düsencharakteristik und von dem Druck ab, mit dem das Material den Düsen zugeleitet wird. Üblicherweise sind die Düsen derart am Verteilergestänge angeordnet, dass sich die Sprühfächer benachbarter Düsen überlappen. Dadurch kann eine besonders homogene Ausbringung des Materials erreicht werden. Bei bekannter Anordnung der Düsen an dem Verteilergestänge ist der Grad der Überlappung der Sprühfächer ermittelbar.

Beim Grad der Überlappung ist neben der räumlichen Überlappung stets auch die zeitliche Überlappung zu berücksichtigen. Das bedeutet, dass aufgrund der Positionen und/oder Klappstellungen der Gestängeabschnitte und der Vortriebsgeschwindigkeit des Nutzfahrzeugs die Sprühfächer der Düsen eine Position der landwirtschaftlichen Nutzfläche auch zeitlich versetzt überstreichen können.

Bei einem vollständig ausgeklappten Verteilergestänge ist der laterale Abstand der einzelnen Düsen zueinander maximal und somit der Grad der Überlappung der Sprühfächer minimal. Bei einer Änderung der Positionen und/oder Klappstellungen der Gestängeabschnitte des Verteilergestänges, beispielsweise zur Einstellung einer geringeren Arbeitsbreite, ändert sich der laterale Abstand der betreffenden Düsen zueinander, womit der Überlapp der betreffenden Sprühfächer zunimmt. Um eine hierdurch hervorgerufene Fehlapplikation zu vermeiden, ist die Ausbringmenge der Düsen anhand der Positionen und/oder Klappstellungen der Gestängeabschnitte des Verteilergestänges und/oder anhand des aus den Positionen und/oder den Klappstellungen der Gestängeabschnitte des Verteilergestänges ermittelten tatsächlichen Grads der Überlappung der Sprühfächer in geeigneter Weise zu reduzieren.

Der Berechnung der geeigneten Ausbringmenge der Düsen in Abhängigkeit von den tatsächlichen Positionen und/oder Klappstellungen der Gestängeabschnitte des Verteilergestänges liegen geometrische Betrachtungen zugrunde, welche die Form und/oder Größe der Sprühfächer berücksichtigen. Die Form der Sprühfächer ist im Allgemeinen elliptisch; ebenso sind aber auch Sprühfächer mit Rechteck- oder Linienprofilen möglich.

Eine Reduktion der Ausbringmenge der Düsen kann auf vielfältige Weise erfolgen. Beispielsweise kann über den Druck, mit dem der Düse das Material zugeleitet wird, eine Anpassung der Ausbringmenge erfolgen. In diesem Fall sind die Ventile beispielsweise als Proportionalventile oder Druckbegrenzungsventile ausgeführt und über die für die Ventile von einer Datenverarbeitungseinheit erzeugten Steuersignale für die Ventile ist der Druck einstellbar, mit welchem das Material den Düsen zugeführt wird.

In einer anderen Ausführungsform können pulsweitenmoduliert und/oder frequenzmoduliert betreibbare Ventile vorgesehen sein. Pulsweitenmoduliert und/oder frequenzmoduliert betreibbare Ventile öffnen und schließen periodisch. Dabei wird die Ausbringmenge im Wesentlichen durch das Verhältnis von Öffnungszeit zu Verschlusszeit festgelegt. Eine Anpassung der Ausbringmenge ist über die von der Datenverarbeitungseinheit erzeugten Steuersignale für die Ventile mittels einer Änderung des Verhältnisses von Öffnungszeit zu Verschlusszeit und/oder einer Variation der Periodendauer in einfacher Weise möglich.

Die Datenverarbeitungseinheit kann beispielsweise Teil eines an sich bekannten Terminals zur Bedienung und/oder Steuerung landwirtschaftlicher Nutzfahrzeuge sein. Alternativ kann die Datenverarbeitungseinheit Teil eines dem Nutzfahrzeug zugeordneten Steuermoduls zur Steuerung von Fahrzeugfunktionen, beispielsweise eines Jobrechners, sein. Üblicherweise sind ein derartiges Terminal und ein derartiges Steuermodul signalverbunden und zur Interaktion eingerichtet.

In einer vorteilhaften Ausführung kann die erfindungsgemäße Anpassung der Ausbringmenge mit aus dem Stand der Technik bekannten Maßnahmen zur Steuerung der Ausbringmenge kombiniert werden. So ist beispielsweise bekannt, die Ausbringmenge in Abhängigkeit von der Vortriebsgeschwindigkeit des landwirtschaftlichen Nutzfahrzeugs einzustellen. Da im Regelfall eine orts- und/oder bedarfsspezifische Sollmenge pro Fläche ausgebracht werden soll, welche der Datenverarbeitungseinheit bekannt ist, sorgt diese Maßnahme dafür, dass diese bei unterschiedlicher und/oder variierender Vortriebsgeschwindigkeit eingehalten werden kann. Insbesondere ist dies bei Kurvenfahrten von großer Bedeutung, da aufgrund der lateralen Erstreckung des in Arbeitsstellung befindlichen Verteilergestänges einzelne Gestängeabschnitte und/oder Düsen unterschiedliche Bahngeschwindigkeiten aufweisen, welche für eine homogene Ausbringung des Materials ausgeglichen werden müssen. So ist es üblich, eine Kurvenfahrt und/oder die Bewegung einzelner Gestängeabschnitte und/oder Düsen zu erfassen, um auf dieser Basis die Ausbringmenge anzupassen. Die erfindungsgemäße Anpassung der Ausbringmenge kann dann bei einem landwirtschaftlichen Nutzfahrzeug alternativ oder zusätzlich zur Verfügung stehen.

Analog ist eine Kombinierbarkeit mit aus dem Stand der Technik bekannten Maßnahmen zur orts- und/oder bedarfsspezifischen Anpassung der Ausbringmenge vorgesehen. Bei einer orts- und/oder bedarfsspezifischen Anpassung der Ausbringmenge liegt der Datenverarbeitungseinheit eine orts- und/oder bedarfsspezifische Sollmenge vor.

In sämtlichen der beschriebenen Fälle ist also erfindungsgemäß vorgesehen, die Ausbringmenge an die lokalen Erfordernisse anhand der Positionen und/oder Klappstellungen der Gestängeabschnitte des Verteilergestänges und/oder anhand des aus den Positionen und/oder Klappstellungen der Gestängeabschnitte des Verteilergestänges ermittelten tatsächlichen Grads der Überlappung der Sprühfächer in geeigneter Weise anzupassen.

Es ist vorteilhaft, dass das Verteilergestänge in Teilarbeitsbreiten unterteilt ist und alle Düsen einer Teilarbeitsbreite mit einem Ventil verbunden sind. Bevorzugt entspricht dabei eine Teilarbeitsbreite der Breite eines Gestängeabschnitts. Somit wird eine einfache und kostengünstige Variante des erfindungsgemäßen Systems bereitgestellt. Durch ein zumindest teilweises Klappen und/oder Verschwenken eines gesamten Auslegers und/oder eines einzelnen Gestängeabschnitts ist dieser im Wesentlichen diagonal zur Vortriebsrichtung ausgerichtet. Dadurch ändert sich der Grad der Überlappung der Sprühfächer in gleichmäßiger Weise für die Düsen eines betreffenden Gestängeabschnitts. Die Ansteuerung eines Ventils, welches die Zuleitung des Matetrials für alle Düsen des betreffenden Gestängeabschnitts regelt, ist daher ausreichend für die Anpassung der Ausbringmenge an den Grad der Überlappung, wobei der Regelungsaufwand gering ist.

Insbesondere kann somit in einfacher Weise die Ausbringung über die Düsen eines betreffenden Gestängeabschnitts beispielsweise gestoppt werden, wenn sich benachbarte, teilweise eingeklappte Gestängeabschnitte in einer parallelen Position befinden. In diesem Fall würde ein vollständiger Überlapp erzielt werden.

Es ist vorteilhaft, dass jede Düse mit jeweils einem Ventil verbunden ist. Bevorzugt entspricht dabei eine Teilarbeitsbreite einer einzelnen Düse. Durch diese Maßnahme kann eine hochgenaue Anpassung der Ausbringmenge erfolgen. In vorteilhafter Weise kann somit auch berücksichtigt werden, dass, insbesondere während einer Kurvenfahrt, die Bahngeschwindigkeit der einzelnen Düsen in lateraler Erstreckung des Verteilergestänges, insbesondere innerhalb eines Gestängeabschnitts, verschieden ist.

Durch diese Maßnahme kann in vorteilhafter Weise berücksichtigt werden, dass die Düsen durch das teilweise Klappen verschiedene Positionen bzgl. der Vortriebsrichtung aufweisen. Somit können die Düsen einzeln nach Bedarf, insbesondere zeitlich versetzt, angesteuert werden. Insbesondere betrifft dies das Aktivieren und/oder Stoppen der Ausbringung von Material durch die betreffende Düse bei Erreichen einer Applikationsgrenze. Dadurch wird die Ausbringung erheblich optimiert, Fehlapplikationen, wie Überlappungen und/oder Auslassungen, werden reduziert.

Applikationsgrenzen können beispielsweise Begrenzungen der landwirtschaftlichen Nutzfläche sein, über die hinaus nicht appliziert werden darf, und/oder Grenzen innerhalb der landwirtschaftlichen Nutzfläche, welche bereits bearbeitete und unbearbeitete Bereiche voneinander trennen.

Es wird ein Vorteil erreicht, indem die Düsen mit pulsweitenmoduliert und/oder frequenzmoduliert betreibbaren Ventilen verbunden sind. Die zuvor beschriebene Funktionsweise von pulsweitenmoduliert und/oder frequenzmoduliert betreibbaren Ventilen ermöglicht eine hochgenaue und sehr schnelle Anpassung der Ausbringmenge. Pulsweitenmoduliert und/oder frequenzmoduliert betreibbare Ventile können in einem breiten Frequenzbereich betrieben werden. Eine typische Betriebsfrequenz liegt im Bereich von 50 Hz. Höhere Betriebsfrequenzen in einer Größenordnung von 100 Hz sind erreichbar. Damit weisen derartige Ventile sehr kurze Schaltzeiten auf, mittels derer zügig auf die Erfordernisse des Arbeitsvorgangs reagiert werden kann.

Ein besonderer Vorteil wird durch die Verwendung von pulsweitenmoduliert und/oder frequenzmoduliert betreibbaren Ventilen erreicht, weil sich durch eine Änderung des Verhältnisses von Öffnungszeit zu Verschlusszeit und/oder einer Variation der Periodendauer des Ventils das von der betreffenden Düse ausgebrachte Tropfenspektrum nicht ändert. Das Tropfenspektrum beeinflusst in hohem Maße die Ausbringqualität. Ein bei verschiedenen Ausbringmengen konstantes Tropfenspektrum stellt eine entsprechend gleichbleibende Ausbringqualität sicher.

Es ist vorteilhaft, dass die Form und/oder Größe der Sprühfächer der an dem Verteilergestänge angeordneten Düsen hinterlegbar ist und basierend auf der Form und/oder Größe der Sprühfächer Steuersignale für die Ventile erzeugbar sind. Durch diese Maßnahme wird in vorteilhafter Weise die zuvor beschriebene exakte Ermittlung des tatsächlichen Grads der Überlappung in Abhängigkeit von der Geometrie des Sprühfächers ermöglicht.

Insbesondere ist diese Maßnahme von Vorteil, wenn die Düsen Bestandteil sogenannter Mehrfachdüsenkörper sind. Mehrfachdüsenkörper tragen jeweils eine Mehrzahl einzelner Düsen, wobei die Düsen in Abhängigkeit von den Erfordernissen des Ausbringvorgangs auswählbar sind. Die Sprühfächer der Düsen eines Mehrfachdüsenkörpers können unterschiedliche Geometrien aufweisen, sodass bei einer ausgewählten Düse der Datenverarbeitungseinheit stets die Geometrie des betreffenden Sprühfächers bekannt sein muss, um die erfindungsgemäße Anpassung der Ausbringmenge in exakter Weise zu leisten.

Weiterhin ist von Vorteil, dass das System Erfassungseinrichtungen aufweist, die zur Erfassung von Positionsänderungen und/oder Klappstellungsänderungen eingerichtet sind und auf deren Basis die Steuersignale für die Ventile erzeugbar sind. Durch diese Maßnahme können Relativbewegungen zwischen den Auslegern und/oder einzelnen Gestängeabschnitten festgestellt werden. Die Datenverarbeitungseinheit kann auf diese Relativbewegungen und/oder auf die durch die Relativbewegungen hervorgerufenen Geschwindigkeitsunterschiede der einzelnen Ausleger, Gestängeabschnitte und/oder Düsen in Echtzeit reagieren und die Steuersignale für die Ventile auf dieser Basis erzeugen. Die Anpassung der Ausbringmenge wird dadurch erheblich optimiert und Fehlapplikationen werden deutlich reduziert.

Grundsätzlich ist für die vorliegende Erfindung zu berücksichtigen, dass eine Veränderung der Position und/oder Klappstellung eines Auslegers und/oder Gestängeabschnitts auf verschiedene Weise hervorgerufen werden kann. Ein kollisionsbedingtes Ausweichen, wie es zuvor beschrieben worden ist, führt zu einer Veränderung der Position und/oder Klappstellung eines Auslegers und/oder Gestängeabschnitts. Dieses Ausweichen kann passiv erfolgen, indem ein Ausleger und/oder Gestängeabschnitt durch den Vortrieb des Nutzfahrzeugs bei einer Kollision verschwenkbar ist.

Alternativ oder zusätzlich kann ein Ausweichen auch vorausschauend, aktiv bei einer zu erwartenden Kollision erfolgen. Dazu ist eine Erfassung der Umgebung denkbar, welche beispielsweise durch die Datenverarbeitungseinheit ausgewertet wird. Die Datenverarbeitungseinheit kann dann geeignete Steuersignale erzeugen, welche Stelleinrichtungen zugeführt werden, die zur Veränderung der Positionen und/oder Klappstellungen der Gestängeabschnitte des Verteilergestänges eingerichtet sind.

Derartige Stelleinrichtungen sind bei gattungsgemäßen Verteilergestängen vorgesehen, um das Verteilergestänge zwischen der Transportstellung und der Arbeitsstellung zu verbringen. Zusätzlich ist es möglich, dass die Stelleinrichtungen genutzt werden, um das Verteilergestänge in eine zuvor beschriebene Teilbreiten-Arbeitsposition zu verbringen und/oder die in der zuvor beschriebenen Weise die Positionen und/oder Klappstellungen der Gestängeabschnitte des Verteilergestänges zu verändern, um die Arbeitsbreite an die Erfordernisse des Ausbringvorgangs anzupassen.

In vorteilhafter Weise ist somit stets die aktuelle Arbeitsbreite des Nutzfahrzeugs bekannt und kann bei der Bedienung und/oder Steuerung des Nutzfahrzeugs berücksichtigt werden.

Ferner ist auf die beschriebene Weise auch bei sich relativ zueinander bewegenden Gestängeabschnitten stets die aktuelle, resultierende Bahngeschwindigkeit der einzelnen Gestängeabschnitte und/oder Düsen bekannt, womit eine weiter optimierte Anpassung der Ausbringmenge möglich ist.

Der Datenverarbeitungseinheit kann eine Speichereinheit zugeordnet sein, wobei in der Speichereinheit Informationen zu bereits bearbeiteten und/oder noch zu bearbeitenden Bereiche einer landwirtschaftlichen Nutzfläche hinterlegt sind. Es ist vorteilhaft, dass auf Basis der Informationen zu bereits bearbeiteten und/oder noch zu bearbeitenden Bereichen die Steuersignale für die Ventile erzeugbar sind. Durch diese Maßnahme kann die Ausbringmenge in einfacher Weise an die an einer Feldposition bereits ausgebrachte Menge angepasst werden.

Durch Kenntnis der exakten Positionen und/oder Klappstellungen der Gestängeabschnitte des Verteilergestänges und/oder der Düsen, insbesondere in Vortriebsrichtung, wird in Zusammenwirken mit den in der Speichereinheit hinterlegten Informationen zu bereits bearbeiteten und/oder noch zu bearbeitenden Bereichen in besonders vorteilhafter Weise eine hochgenaue Anpassung der Ausbringmenge ermöglicht. Insbesondere kann die Ausbringung eines einzelnen Gestängeabschnitts und/oder einer einzelnen Düse zu geeigneten Zeitpunkten aktiviert und/oder gestoppt werden.

Es ist vorteilhaft, dass mittels der erzeugbaren Steuersignale für die Ventile die Ausbringmenge der Düsen steuerbar ist. Durch die fluidleitende Verbindung zwischen den Ventilen und den Düsen wird über die Ventile die den Düsen zugeleitete Materialmenge reguliert. Dadurch werden in besonders einfacher Weise die zuvor beschriebenen Maßnahmen ermöglicht. Insbesondere ist zu bedenken, dass die Ausbringmenge einer Düse auch Null sein kann. Insofern wird in einfacher Weise die Funktionalität einer an sich bekannten Teilbreitenschaltung mit abgedeckt.

Zum Erreichen der genannten Vorteile ist vorgesehen, ein landwirtschaftliches Nutzfahrzeug zum Ausbringen von Material, wie Düngemittel, Pflanzenschutzmittel oder Saatgut mit einem beschriebenen Steuer- und/oder Regelsystem auszurüsten. Hinsichtlich der Vorteile und Modifikationen des erfindungsgemäßen landwirtschaftlichen Nutzfahrzeugs wird auf die Vorteile und Modifikationen des erfindungsgemäßen Steuer- und/oder Regelsystems verwiesen.

Erfindungsgemäß ist zusätzlich ein Verfahren der eingangs genannten Art vorgesehen, wobei die Ausbringmenge der Düsen über die erzeugten Steuersignale für die Ventile verändert wird. Hinsichtlich der Vorteile und Modifikationen des erfindungsgemäßen Verfahrens wird zunächst auf die Vorteile und Modifikationen des erfindungsgemäßen Steuer- und/oder Regelsystems verwiesen.

In einer besonders bevorzugten Ausführungsform des erfindungsgemäßen Verfahrens erfolgt das Verändern der Ausbringmenge der Düsen über die erzeugten Steuersignale für die Ventile mittels einer Pulsweitenmodulation und/oder einer Frequenzmodulation. Durch die Pulsweitenmodulation und/oder die Frequenzmodulation wird ein periodisches Öffnen und Schließen der Ventile erreicht. Dabei wird die Ausbringmenge im Wesentlichen durch das Verhältnis von Öffnungszeit zu Verschlusszeit festgelegt. Das Verändern der Ausbringmenge der Düsen umfasst vorzugsweise das Ändern des Verhältnisses von Öffnungszeit zu Verschlusszeit und/oder das Variieren der Periodendauer.

Außerdem ist ein erfindungsgemäßes Verfahren vorteilhaft, bei welchem das Erzeugen von Steuersignalen für die Ventile auf Basis der Form und/oder Größe der Sprühfächer der an dem Verteilergestänge angeordneten Düsen erfolgt. Üblicherweise sind die Düsen derart am Verteilergestänge angeordnet, dass sich die Sprühfächer benachbarter Düsen überlappen. Dadurch kann eine besonders homogene Ausbringung des Materials erreicht werden. Kommt es zu einer Positionsänderung eines oder mehrerer Gestängeabschnitte des Verteilergestänges bedarf es zur Aufrechterhaltung der homogenen Ausbringung des Materials einer Anpassung der Ausbringmenge an einer oder mehreren Düsen.

Ferner ist ein erfindungsgemäßes Verfahren vorteilhaft, bei welchem Positionsänderungen und/oder Klappstellungsänderungen der Gestängeabschnitte der seitlichen Ausleger erfasst werden. Das Erzeugen von Steuersignalen für die Ventile erfolgt auf Basis der erfassten Positionsänderungen und/oder Klappstellungsänderungen der Gestängeabschnitte der seitlichen Ausleger. Das Erfassen der Positionsänderungen und/oder Klappstellungsänderungen der Gestängeabschnitte der seitlichen Ausleger erfolgt vorzugsweise über Erfassungsmittel, insbesondere Sensoren. Bevorzugt sind die Erfassungsmittel im Grenzbereich zwischen zwei benachbarten Gestängeabschnitten und/oder zwischen einem Mittelteil des Verteilergestänges und einem benachbarten Gestängeabschnitt angeordnet. In besonders bevorzugter Weise ist jedem Grenzbereich ein Erfassungsmittel zugeordnet. Vorzugsweise umfasst das Erfassen der Positionsänderungen und/oder Klappstellungsänderungen der Gestängeabschnitte der seitlichen Ausleger das Erfassen von Positionsabweichungen und/oder Winkelabweichungen von Referenzwerten. Die Referenzwerte können beispielsweise durch die Positionen und/oder die Klappstellungen der Gestängeabschnitte des Verteilergestänges bei vollständig ausgeklappter Arbeitsstellung des Verteilergestänges definiert sein.

In einer Weiterbildung des erfindungsgemäßen Verfahrens erfolgt das Erzeugen von Steuersignalen für die Ventile auf Basis von Informationen zu bereits bearbeiteten und/oder noch zu bearbeitenden Bereichen einer landwirtschaftlichen Nutzfläche. Die Informationen zu bereits bearbeiteten und/oder noch zu bearbeitenden Bereichen der landwirtschaftlichen Nutzfläche können auf einer Speichereinheit des landwirtschaftlichen Nutzfahrzeugs hinterlegt sein. Durch Kenntnis der exakten Positionen und/oder Klappstellungen der Gestängeabschnitte des Verteilergestänges und/oder der Düsen, insbesondere in Vortriebsrichtung, kann mit den Informationen zu bereits bearbeiteten und/oder noch zu bearbeitenden Bereichen in besonders vorteilhafter Weise eine hochgenaue Anpassung der Ausbringmenge ermöglicht werden. Insbesondere kann die Ausbringung eines einzelnen Gestängeabschnitts und/oder einer einzelnen Düse zu geeigneten Zeitpunkten aktiviert und/oder gestoppt werden.

Weitere Einzelheiten der Erfindung sind der Beispielsbeschreibung und den Zeichnungen zu entnehmen. Die Zeichnungen zeigen
- Fig. 1: an landwirtschaftliches Nutzfahrzeug in Form einer gezogenen Feldspritze mit in Transportstellung befindlichem Verteilergestänge in perspektivischer Darstellung von schräg hinten oben,
- Fig. 2: eine Feldspritze mit in Arbeitsposition befindlichem Verteilergestänge in perspektivischer Darstellung von schräg hinten oben,
- Fig. 3: eine Feldspritze mit einem angewinkelten äußeren Gestängeabschnitt in einer Ansicht von oben,
- Fig. 4: eine Feldspritze mit einem angewinkelten Ausleger in einer Ansicht von oben,
- Fig. 5: eine Feldspritze mit einem eingeklappten äußeren Gestängeabschnitt in einer Ansicht von hinten,
- Fig. 6: eine Feldspritze mit in einer Teilbreiten-Arbeitsposition befindlichem Verteilergestänge in perspektivischer Darstellung von schräg hinten oben,
- Fig. 7.1: einen Klappzustand des Verteilergestänges einer Feldspritze in einer Ansicht von oben,
- Fig. 7.2: einen weiteren Klappzustand des Verteilergestänges einer Feldspritze in einer Ansicht von oben,
- Fig. 7.3: einen weiteren Klappzustand des Verteilergestänges einer Feldspritze in einer Ansicht von oben,
- Fig. 7.4: einen weiteren Klappzustand des Verteilergestänges einer Feldspritze in einer Ansicht von oben, und
- Fig. 7.5: einen weiteren Klappzustand des Verteilergestänges einer Feldspritze in einer Ansicht von oben.

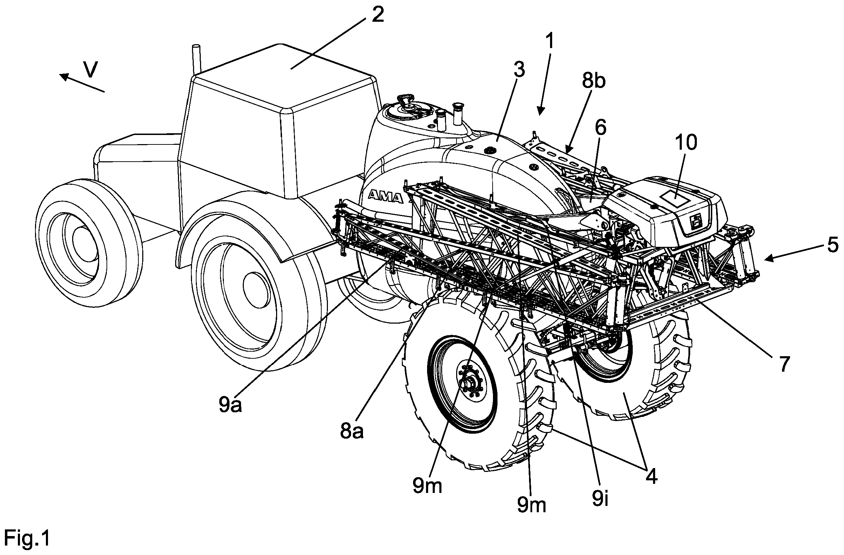

Landwirtschaftliche Nutzfahrzeuge in Form landwirtschaftlicher Feldspritzen 1, wie sie in den Fig. 1 bis 7 dargestellt sind, werden zum Ausbringen von Material, wie Düngemittel, Pflanzenschutzmittel und/oder Saatgut auf landwirtschaftlichen Nutzflächen verwendet.

Landwirtschaftliche Feldspritzen 1 können als selbstfahrende, an einem Zugfahrzeug 2 angebaute oder, wie im gewählten Ausführungsbeispiel, als von einem Zugfahrzeug 2 gezogene Variante vorgesehen sein.

Zur Bevorratung des auszubringenden Materials umfasst eine Feldspritze 1 einen Vorratsbehälter 3. Der Vorratsbehälter 3 stützt sich auf einem Rahmen ab, welcher mit dem Zugfahrzeug 2 verbunden ist und über Räder 4 auf dem Erdboden abgestützt ist.

Zum Ausbringen des bevorrateten Materials umfasst die Feldspritze 1 ein Verteilergestänge 5, welches über eine Aufhängevorrichtung 6 mit dem Rahmen verbunden ist. Das Verteilergestänge 5 umfasst einen Mittelteil 7 und zwei seitlich an dem Mittelteil 7 angeordnete Ausleger 8a, 8b. Die Ausleger 8a, 8b umfassen jeweils zumindest einen äußeren Gestängeabschnitt 9a und einen inneren Gestängeabschnitt 9i, welcher mit dem Mittelteil 7 verbunden ist. Zusätzlich können die Ausleger 8a, 8b, wie im gewählten Beispiel, einen oder mehrere mittlere Gestängeabschnitte 9m umfassen, welche jeweils zwischen dem inneren Gestängeabschnitt 9i und dem äußeren Gestängeabschnitt 9a angeordnet sind.

Die jeweils benachbarten Gestängeabschnitte 9a, 9i, 9m sind mittels Gelenken miteinander verbunden. Die inneren Gestängeabschnitte 9i sind mittels Gelenken mit dem Mittelteil 7 verbunden.

An den Gestängeabschnitten 9a, 9i, 9m sind beabstandet zueinander Düsen angeordnet, welche über ein Leitungssystem fluidleitend mit dem Vorratsbehälter 3 verbunden sind und durch die das auszubringende Material ausgebracht wird. In der bevorzugten Ausführungsform ist jeder Düse ein ansteuerbares Ventil zugeordnet, über welches die der Düse zugeführte Ausbringmenge gesteuert und/oder geregelt wird.

Wird durch eine an dem Verteilergestänge 5 angeordnete Düse Material ausgebracht, formt sich ein Sprühfächer aus. Die Geometrie des Sprühfächers hängt dabei beispielsweise von der Düsencharakteristik und von dem Druck ab, mit dem das Material den Düsen zugeleitet wird. Üblicherweise sind die Düsen derart am Verteilergestänge 5 angeordnet, dass sich die Sprühfächer benachbarter Düsen überlappen. Die Anordnung der Düsen an dem Verteilergestänge 5 ist ebenso wie die Geometrie des Sprühfächers bekannt und in einer der Datenverarbeitungseinheit zugeordneten Speichereinheit hinterlegt. Auf Basis dieser Daten wird der Grad der Überlappung der Sprühfächer ermittelt.

Jedem Gestängeabschnitt 9a, 9i, 9m ist eine nicht dargestellte Stelleinrichtung zugeordnet, mittels welcher die gelenkig verbundenen Gestängeabschnitte 9a, 9i, 9m zueinander und somit das Verteilergestänge 5 klappbar ist. Die Stelleinrichtungen können hydraulisch, pneumatisch oder anderweitig gleichwirkend betrieben sein.

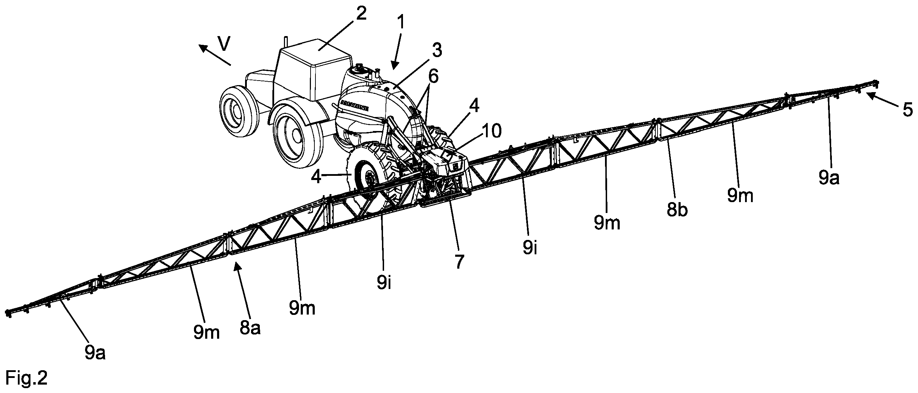

Für Straßentransportfahrten ist das Verteilergestänge 5 mittels der Stelleinrichtungen in eine Transportstellung verbringbar, wie sie in Fig. 1 gezeigt ist. Zum Ausbringen von Material ist das Verteilergestänge 5 in eine Arbeitsposition bringbar, wie sie in Fig. 2 gezeigt ist. In dieser Arbeitsposition erstreckt sich das Verteilergestänge 5 im Wesentlichen quer zur Vortriebsrichtung V. Die Arbeitsbreite eines vollständig ausgeklappten Verteilergestänges 5 kann dabei bis zu 50m betragen.

Die Feldspritze 1 weist mehrere nicht dargestellte, als Sensoren ausgeführte Erfassungsmittel auf. Die Erfassungsmittel sind als Potentiometer, beispielsweise als Linearpotentiometer oder als Drehpotentiometer ausgeführt, und im Grenzbereich zwischen zwei benachbarten Gestängeabschnitten 9a, 9i, 9m und/oder zwischen dem Mittelteil 7 und einem benachbarten Gestängeabschnitt 9i angeordnet. Somit sind die Erfassungsmittel den Gelenken zwischen zwei benachbarten Gestängeabschnitten 9a, 9i, 9m und/oder zwischen dem Mittelteil 7 und einem benachbarten Gestängeabschnitt 9i zugeordnet.

Die Erfassungsmittel sind eingerichtet, die Winkelstellung zwischen zwei benachbarten Gestängeabschnitten 9a, 9i, 9m und/oder zwischen dem Mittelteil 7 und einem benachbarten Gestängeabschnitt 9i zu erfassen und die Messdaten einer der Feldspritze zugeordneten Datenverarbeitungseinheit zuzuführen. Über die Winkelstellung zwischen zwei benachbarten Gestängeabschnitten 9a, 9i, 9m und/oder zwischen dem Mittelteil 7 und einem benachbarten Gestängeabschnitt 9i sind die Positionen und/oder Klappstellungen der Ausleger 8a, 8b und/oder der Gestängeabschnitte 9a, 9i, 9m ermittelbar.

Alternativ können die Erfassungsmittel auch den Stelleinrichtungen zwischen zwei benachbarten Gestängeabschnitten 9a, 9i, 9m und/oder zwischen dem Mittelteil 7 und einem benachbarten Gestängeabschnitt 9i zugeordnet sein. Über eine Erfassung der Arbeitsstellung der Stelleinrichtung ist in analoger Weise eine Ermittlung der Positionen und/oder Klappstellungen der Ausleger 8a, 8b und/oder der Gestängeabschnitte 9a, 9i, 9m möglich.

Bei der Durchführung eines Ausbringvorgangs ist es oft erforderlich, die Arbeitsbreite des Verteilergestänges 5 an die Erfordernisse des Ausbringvorgangs anzupassen. Insbesondere muss dazu die tatsächliche Arbeitsbreite gegenüber der bei vollständig ausgeklappten Verteilergestänge 5 maximal möglichen Arbeitsbreite reduziert werden, wenn es beispielsweise räumlich nicht möglich und/oder gesetzlich nicht erlaubt ist, den Ausbringvorgang mit maximal ausgeklappten Verteilergestänge 5 fortzusetzen.

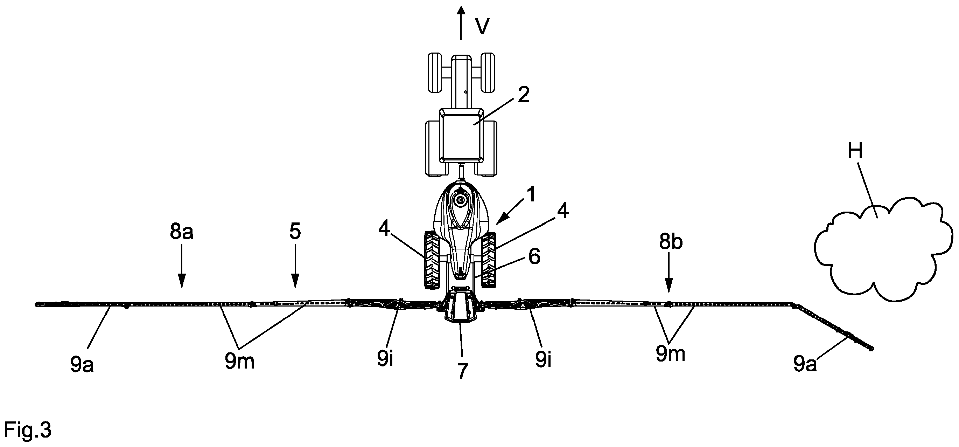

Ein typisches Beispiel ist ein auf der zu bearbeitenden Fläche befindliche Hindernis H, wie beispielsweise in den Fig. 3 bis 5 gezeigt. Um Beschädigungen des Verteilergestänges 5 zu vermeiden, können Gestängeabschnitte 9a, 9i, 9m bei einer erfolgten und/oder erwarteten Kollision entgegen der Vortriebsrichtung V ausweichen (Fig. 3).

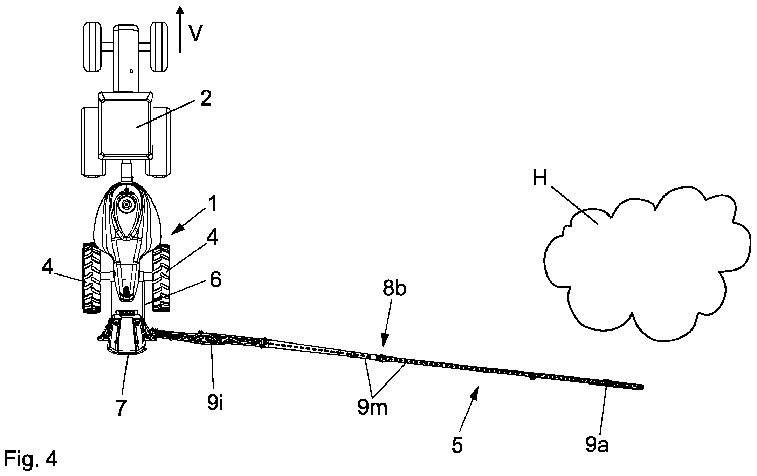

In analoger Weise kann auch ein Ausleger 8b vollständig entgegen der Vortriebsrichtung V bei erfolgter und/oder zu erwartender Kollision mit einem Hindernis H ausweichen, wie es unter Weglassen des zweiten Auslegers in Fig. 4 gezeigt ist.

Das Ausweichen kann passiv erfolgen. Durch den fortwährenden Vortrieb der Feldspritze 1 verschwenkt dann ein Gestängeabschnitt 9a, 9i, 9m und/oder eine Ausleger 8a, 8b entgegen der Vortriebsrichtung V.

Alternativ kann das Ausweichen aktiv erfolgen. Dazu ist eine Erfassung der Umgebung denkbar, welche beispielsweise durch die Datenverarbeitungseinheit ausgewertet wird. Die Datenverarbeitungseinheit erzeugt dann geeignete Steuersignale, welche Stelleinrichtungen zugeführt werden, die zur Veränderung der Positionen und/oder Klappstellungen der Gestängeabschnitte des Verteilergestänges eingerichtet sind.

Mittels eines Steuer- und/oder Regelsystem 10 der Feldspritze 1 werden Steuersignale für die Ventile erzeugt, welche eine Anpassung der Ausbringmenge an einer, mehreren oder sämtlichen Düsen veranlassen. Die Anpassung der Ausbringmenge erfolgt dabei in Abhängigkeit der Veränderung der Positionen und/oder Klappstellungen der Gestängeabschnitte 9a, 9m, 9i.

Nach erfolgtem Ausweichen von Gestängeabschnitten 9a, 9i, 9m und/oder Auslegern 8a, 8b ist vorgesehen, dass der Gestängeabschnitt 9a, 9i, 9m selbsttätig in seine Ausgangslage zurückkehrt.

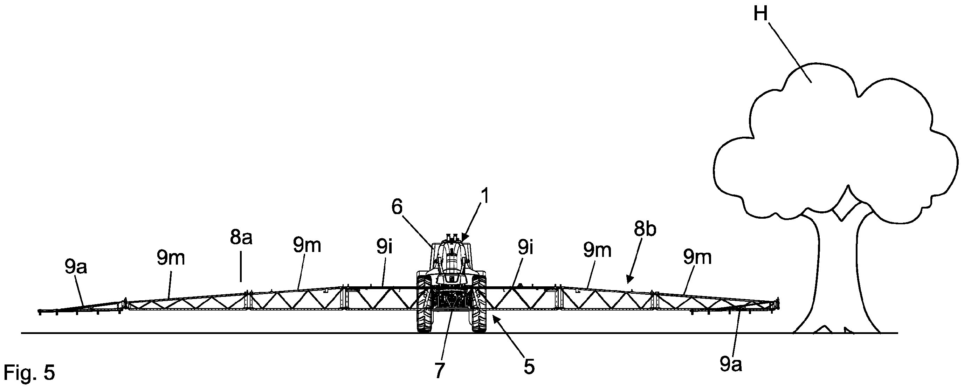

Fig. 5 zeigt zur Umgehung des Hindernisses H ein vollständiges Einklappen des betreffenden äußeren Gestängeabschnitts 9a, um eine angepasste Teilbreiten-Arbeitsposition des Verteilergestänges 5 zu erreichen.

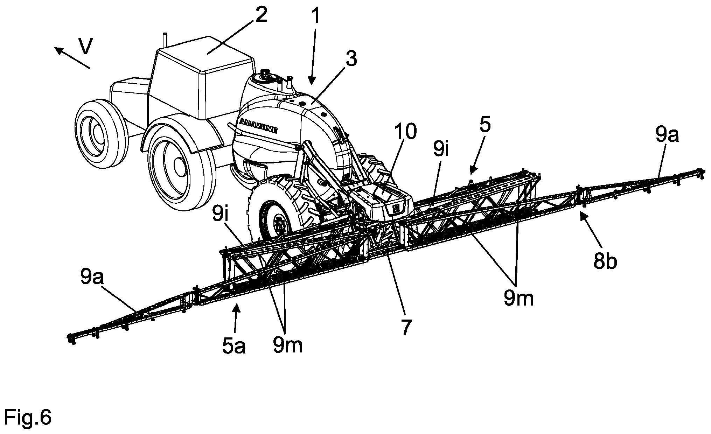

Eine weitere, symmetrische Teilbreiten-Arbeitsposition zu Anpassung der Arbeitsbreite ist in Fig. 6 gezeigt. Hier sind die mittleren Gestängeabschnitte 9m eingeklappt und in eine zueinander parallele Position gebracht.

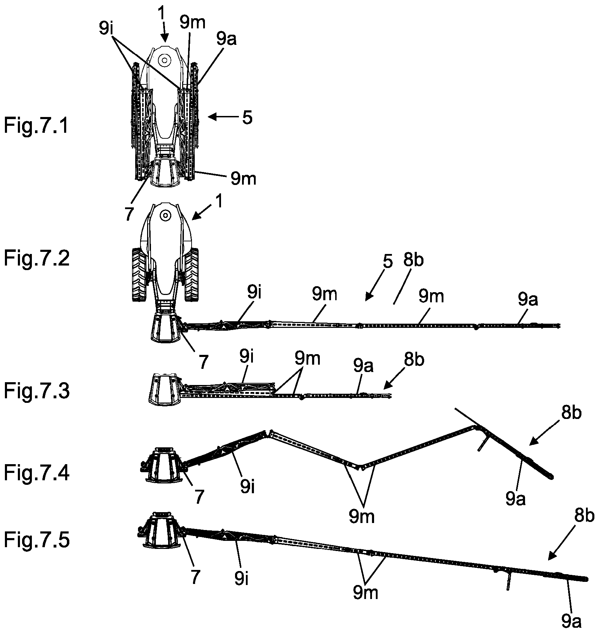

In den Fig. 7.1 bis 7.5 ist beispielhaft eine schematische Übersicht über erreichbare Positionen und/oder Klappstellungen der Ausleger 8a, 8b und/oder Gestängeabschnitte 9a, 9i, 9m gegeben. Zur Vereinfachung der Darstellung ist das Verteilergestänge 5 jeweils nur einseitig dargestellt.

Fig. 7.1 zeigt dabei noch einmal die Transportstellung, Fig. 7.2 die vollständig ausgeklappte Arbeitsstellung maximaler Arbeitsbreite. Fig. 7.3 zeigt eine teilgeklappte Teilbreiten-Arbeitsposition. Fig. 7.4 zeigt einen angewinkelten Ausleger 8b. Fig. 7.5 zeigt das Verteilergestänge mit angewinkelten Gestängeabschnitten 9a, 9i, 9m.

Derartige Positionen und/oder Klappstellungen der Ausleger 8a, 8b und/oder der Gestängeabschnitte 9a, 9i, 9m können mithilfe der Stelleinrichtungen herbeigeführt werden und dient zur kontinuierlichen Anpassung der Arbeitsbreite an die Erfordernisse des Ausbringvorgangs.

Unabhängig von Ihrer Ursache, sei es durch passives oder aktives Verschwenken, führt eine Änderung der Position und/oder Klappstellung eines Auslegers 8a, 8b und/oder Gestängeabschnitts 9a, 9i, 9m stets zu einer Veränderung des Grads der Überlappung der Sprühfächer der an dem betreffenden Ausleger 8a, 8b und/oder Gestängeabschnitt 9a, 9i, 9m. Der Grad der Überlappung der Sprühfächer beeinflusst die pro Flächeneinheit ausgebrachte Menge an auszubringendem Material.

Um eine möglichst homogene Ausbringung zu erreichen ist auch bei maximaler Arbeitsbreite ein festgelegter Grad der Überlappung der Sprühfächer benachbarter Düsen vorgesehen. Eine Veränderung der Position und/oder Klappstellung eines Auslegers 8a, 8b und/oder Gestängeabschnitts 9a, 9i, 9m führt zu einem reduzierten lateralen Abstand der betreffenden Düsen und somit zu einem gesteigerten Grad der Überlappung.

Um die Ausbringmenge an die orts- und/oder bedarfsspezifische Sollmenge anzugleichen, ist eine Anpassung der Ausbringmenge der betreffenden Düsen an den veränderten Grad der Überlappung der Sprühfächer notwendig.

Die Datenverarbeitungseinheit verarbeitet zu diesem Zweck die Messdaten der Erfassungsmittel zur Erfassung der Positionen und/oder der Klappstellungen der Gestängeabschnitte 9a, 9i, 9m des Verteilergestänges 5 und erzeugt aus diesen Steuersignale für die ansteuerbaren Ventile.

Die Ventile können dann beispielsweise als Proportionalventile oder Druckbegrenzungsventile ausgeführt sein. Über die für die Ventile von der Datenverarbeitungseinheit erzeugten Steuersignale für die Ventile wird dann der Druck eingestellt, mit welchem das Material den Düsen zugeführt wird.

In bevorzugter Ausführung sind pulsweitenmoduliert und/oder frequenzmoduliert betreibbare Ventile vorgesehen. Eine Anpassung der Ausbringmenge ist über die von der Datenverarbeitungseinheit erzeugten Steuersignale für die Ventile mittels einer Änderung des Verhältnisses von Öffnungszeit zu Verschlusszeit und/oder einer Variation der Periodendauer in einfacher Weise möglich.

Durch eine zusätzliche Erfassung von Positionsänderungen und/oder Klappstellungsänderungen der einzelnen Gestängeabschnitte 9a, 9i, 9m werden Relativgeschwindigkeiten zwischen den einzelnen Gestängeabschnitten 9a, 9i, 9m bzw. Düsen erfasst und der Datenverarbeitungseinheit zugeführt. Dadurch können die beschriebenen Anpassungen der Ausbringmenge in Echtzeit auch während einer, beispielsweise durch Verschwenken hervorgerufenen, Relativbewegung der Gestängeabschnitte 9a, 9i, 9m bzw. Düsen durchgeführt werden.

Die vorgesehene Datenverarbeitungseinheit kann beispielsweise Teil eines an sich bekannten Terminals zur Bedienung und/oder Steuerung landwirtschaftlicher Nutzfahrzeuge sein. Alternativ kann die Datenverarbeitungseinheit Teil eines dem Nutzfahrzeug zugeordneten Steuermoduls zur Steuerung von Fahrzeugfunktionen, beispielsweise eines Jobrechners, sein. Üblicherweise sind ein derartiges Terminal und ein derartiges Steuermodul signalverbunden und zur Interaktion eingerichtet.

Das erfindungsgemäße Steuer- und/oder Regelsystem 10 sowie das erfindungsgemäße Verfahren sind mit an sich bekannten Systemen und/oder Verfahren zur orts- und/oder bedarfsspezifischen Ausbringung von Material kombinierbar. In der der Datenverarbeitungseinheit zugeordneten Speichereinheit sind Informationen über bereits bearbeitete und noch zu bearbeitende Bereiche der Nutzfläche hinterlegt. So kann die Ausbringmenge in der beschriebenen Weise zusätzlich auf Basis dieser Informationen angepasst werden.

Da über die Positionen und/oder Klappstellungen der Gestängeabschnitte 9a, 9i, 9m des Verteilergestänges 5 die Position, insbesondere in Vortriebsrichtung (vgl. Fig. 7.5), jeder Düse bekannt ist, können insbesondere abhängig von der Vortriebsgeschwindigkeit Zeitpunkte für jede Düse ermittelt werden, zu denen die Ausbringung von Material aktiviert bzw. gestoppt werden muss, damit lückenlos die orts- und/oder bedarfsspezifische Sollmenge ausgebracht wird.

Die orts- und/oder bedarfsspezifische Sollmenge wird in an sich bekannter Weise auf Basis des aktuellen Ausbringvorgangs festgelegt und der Datenverarbeitungseinheit zugeführt.

Durch die vorliegende Erfindung ist somit ein einfacher Weise ein leistungsfähiges System sowie Verfahren zur flexiblen Einstellung der Arbeitsbreite sowie zur Optimierung des Ausbringvorgangs gegeben.

### Bezugszeichen

- 1: Landwirtschaftliches Nutzfahrzeug
- 2: Zugfahrzeug
- 3: Vorratsbehälter
- 4: Räder
- 5: Verteilergestänge
- 6: Aufhängevorrichtung
- 7: Mittelteil
- 8a, 8b: Ausleger
- 9a, 9i, 9m: Gestängeabschnitte
- 10: Steuer- und/oder Regelsystem
- V: Vortriebsrichtung
- H: Hindernis

## Patentansprüche

1. Landwirtschaftliches Nutzfahrzeug (1) zum Ausbringen von Material, wie Düngemittel, Pflanzenschutzmittel oder Saatgut, mit einem Steuer- und/oder Regelsystem (10), mit einem Verteilergestänge (5) zum Ausbringen von Material, welches zwei seitliche Ausleger (9a, 9b) mit jeweils zumindest einem bewegbaren Gestängeabschnitt (9a, 9i, 9m) umfasst, wobei die Gestängeabschnitte (9a, 9i, 9m) zumindest zwei Arbeitspositionen, also Positionen und/oder Klappstellungen, wobei die Gestängeabschnitte eines Auslegers jeweils zueinander und/oder die Ausleger jeweils zueinander relative Winkel aufweisen, aufweisen und Düsen an den Gestängeabschnitten (9a, 9i, 9m) angeordnet sind, welche mit ansteuerbaren Ventilen verbunden sind, und wobei das System (10) mehrere Erfassungsmittel und eine Datenverarbeitungseinheit aufweist, wobei die Erfassungsmittel zur Erfassung der Arbeitsposition der Gestängeabschnitte (9a, 9i, 9m) des Verteilergestänges (5) eingerichtet sind, **dadurch gekennzeichnet, dass** wobei die Datenverarbeitungseinheit derart konfiguriert ist, dass die Signale der Erfassungsmittel verarbeitbar sind und auf deren Basis Steuersignale für die Ventile erzeugbar sind, wobei über die Steuersignale für die Ventile die Ausbringmenge der Düsen veränderbar ist.

2. Fahrzeug (10) nach Anspruch 1,
**dadurch gekennzeichnet, dass** das Verteilergestänge (5) in Teilarbeitsbreiten unterteilt ist und alle Düsen einer Teilarbeitsbreite mit einem Ventil verbunden sind.

3. Fahrzeug (10) nach Anspruch 1 oder 2,
**dadurch gekennzeichnet, dass** jede Düse mit jeweils einem Ventil verbunden ist.

4. Fahrzeug (10) nach einem der vorstehenden Ansprüche,
**dadurch gekennzeichnet, dass** die Düsen mit pulsweitenmoduliert und/oder frequenzmoduliert betreibbaren Ventilen verbunden sind.

5. Fahrzeug (10) nach einem der vorstehenden Ansprüche,
**dadurch gekennzeichnet, dass** die Form und/oder Größe der Sprühfächer der an dem Verteilergestänge (5) angeordneten Düsen hinterlegbar ist und basierend auf der Form und/oder Größe der Sprühfächer Steuersignale für die Ventile erzeugbar sind.

6. Fahrzeug (10) nach einem der vorstehenden Ansprüche,
**dadurch gekennzeichnet, dass** das System (10) Erfassungseinrichtungen aufweist, die zur Erfassung von Positionsänderungen und/oder Klappstellungsänderungen der Gestängeabschnitte (9a, 9i, 9m) der seitlichen Ausleger (9a, 9b) eingerichtet sind und auf deren Basis die Steuersignale für die Ventile erzeugbar sind.

7. Fahrzeug (10) nach einem der vorstehenden Ansprüche,
wobei in einer Speichereinheit Informationen zu bereits bearbeiteten und/oder noch zu bearbeitenden Bereichen einer landwirtschaftlichen Nutzfläche hinterlegbar sind,
**dadurch gekennzeichnet, dass** auf deren Basis die Steuersignale für Ventile erzeugbar sind.

8. Verfahren zum Steuern- und/oder Regeln eines landwirtschaftlichen Nutzfahrzeugs (1) nach einem der Ansprüche 1 bis 7, wobei das landwirtschaftliche Nutzfahrzeug (1) ein Verteilergestänge (5) zum Ausbringen von Material aufweist, welches zwei seitliche Ausleger (9a, 9b) mit jeweils zumindest einem bewegbaren Gestängeabschnitt (9a, 9i, 9m) umfasst, wobei die Gestängeabschnitte (9a, 9i, 9m) zumindest zwei Arbeitspositionen, also Positionen und/oder Klappstellungen, wobei die Gestängeabschnitte eines Auslegers jeweils zueinander und/oder die Ausleger jeweils zueinander relative Winkel aufweisen, aufweisen und Düsen an den Gestängeabschnitten (9a, 9i, 9m) angeordnet sind, welche mit ansteuerbaren Ventilen verbunden sind, mit dem Schritt:
- Erfassen der Arbeitsposition der Gestängeabschnitte (9a, 9i, 9m) des Verteilergestänges (5);
**gekennzeichnet durch die Schritte:**
- Erzeugen von Steuersignalen für die Ventile auf Basis der erfassten Arbeitsposition der Gestängeabschnitte (9a, 9i, 9m);
- Verändern der Ausbringmenge der Düsen über die erzeugten Steuersignale für die Ventile.

9. Verfahren nach Anspruch 8,
**dadurch gekennzeichnet, dass** das Verändern der Ausbringmenge der Düsen über die erzeugten Steuersignale für die Ventile mittels einer Pulsweitenmodulation und/oder einer Frequenzmodulation erfolgt.

10. Verfahren nach Anspruch 8 oder 9,
**dadurch gekennzeichnet, dass** das Erzeugen von Steuersignalen für die Ventile auf Basis der Form und/oder Größe der Sprühfächer der an dem Verteilergestänge (5) angeordneten Düsen erfolgt.

11. Verfahren nach einem der Ansprüche 8 bis 10,
**gekennzeichnet durch den Schritt:**
- Erfassen von Positionsänderungen und/oder Klappstellungsänderungen der Gestängeabschnitte (9a, 9i, 9m) der seitlichen Ausleger (9a, 9b),
wobei das Erzeugen von Steuersignalen für die Ventile auf Basis der erfassten Positionsänderungen und/oder Klappstellungsänderungen der Gestängeabschnitte (9a, 9i, 9m) der seitlichen Ausleger (9a, 9b) erfolgt.

12. Verfahren nach einem der Ansprüche 8 bis 11,
**dadurch gekennzeichnet, dass** das Erzeugen von Steuersignalen für die Ventile auf Basis von Informationen zu bereits bearbeiteten und/oder noch zu bearbeitenden Bereichen einer landwirtschaftlichen Nutzfläche erfolgt.

## Claims

1. Agricultural utility vehicle (1) for dispensing material, such as fertilizers, plant protectants or seed, comprising an open-loop and/or closed-loop control system (10), comprising a distributor boom (5) for dispensing material, which comprises two lateral arms (9a, 9b) which each have at least one movable boom portion (9a, 9i, 9m), the boom portions (9a, 9i, 9m) having at least two working positions, i.e. positions and/or folding positions, the boom portions of an arm each having angles relative to one another and/or the arms each having angles relative to one another, and nozzles being arranged on the boom portions (9a, 9i, 9m), which nozzles are connected to controllable valves, and the system (10) having a plurality of detection means and a data processing unit, the detection means being designed to detect the working position of the boom portions (9a, 9i, 9m) of the distributor boom (5), **characterized in that** the data processing unit is configured such that the signals from the detection means can be processed and control signals for the valves can be generated on the basis thereof, the output quantity of the nozzles being changeable by means of the control signals for the valves.

2. Vehicle (10) according to claim 1,
**characterized in that** the distributor boom (5) is divided into partial working widths and all nozzles of a partial working width are connected to a valve.

3. Vehicle (10) according to claim 1 or 2,
**characterized in that** each nozzle is connected to one valve in each case.

4. Vehicle (10) according to any of the preceding claims,
**characterized in that** the nozzles are connected to valves which are operable in a pulse-width-modulated and/or frequency-modulated manner.

5. Vehicle (10) according to any of the preceding claims,
**characterized in that** the shape and/or size of the spray fans of the nozzles arranged on the distributor boom (5) can be stored and control signals for the valves can be generated on the basis of the shape and/or size of the spray fans.

6. Vehicle (10) according to any of the preceding claims,
**characterized in that** the system (10) has detection devices which are designed to detect position changes and/or folding position changes of the boom portions (9a, 9i, 9m) of the lateral arms (9a, 9b), on the basis of which the control signals for the valves can be generated.

7. Vehicle (10) according to any of the preceding claims,
information regarding already processed and/or yet to be processed regions of an agricultural area being storable in a memory unit,
**characterized in that** the control signals for valves can be generated on the basis thereof.

8. Method for open-loop and/or closed-loop control of an agricultural utility vehicle (1) according to any of claims 1 to 7, the agricultural utility vehicle (1) having a distributor boom (5) for dispensing material, which comprises two lateral arms (9a, 9b) which each have at least one movable boom portion (9a, 9i, 9m), the boom portions (9a, 9i, 9m) having at least two working positions, i.e. positions and/or folding positions, the boom portions of an arm each having angles relative to one another and/or the arms each having angles relative to one another, and nozzles being arranged on the boom portions (9a, 9i, 9m), which nozzles are connected to controllable valves, comprising the step of:
- detecting the working position of the boom portions (9a, 9i, 9m) of the distributor boom (5);
**characterized by** the steps of:
- generating control signals for the valves on the basis of the detected working position of the boom portions (9a, 9i, 9m);
- changing the output quantity of the nozzles by means of the generated control signals for the valves.

9. Method according to claim 8,
**characterized in that** the output quantity of the nozzles is changed by means of the generated control signals for the valves by means of a pulse width modulation and/or a frequency modulation.

10. Method according to claim 8 or 9,
**characterized in that** control signals for the valves are generated on the basis of the shape and/or size of the spray fans of the nozzles arranged on the distributor boom (5).

11. Method according to any of claims 8 to 10,
**characterized by** the step of:
- detecting position changes and/or
folding position changes of the boom portions (9a, 9i, 9m) of the lateral arms (9a, 9b),
control signals for the valves being generated on the basis of the detected position changes and/or folding position changes of the boom portions (9a, 9i, 9m) of the lateral arms (9a, 9b).

12. Method according to any of claims 8 to 11,
**characterized in that** control signals for the valves are generated on the basis of information regarding already processed and/or yet to be processed regions of an agricultural area.

## Revendications

1. Véhicule utile agricole (1) destiné à épandre du matériau, tel que des engrais, des agents de phytoprotection ou des semences, comportant un système de commande et/ou de réglage (10), comportant une rampe distributrice (5) destinée à épandre du matériau, qui comprend deux bras latéraux (9a, 9b) comportant respectivement au moins une section de rampe (9a, 9i, 9m) mobile, les sections de rampe (9a, 9i, 9m) présentant au moins deux positions de travail, c'est-à-dire des positions et/ou de situations repliées, les sections de rampe d'un bras présentant respectivement l'une par rapport à l'autre et/ou les bras présentant respectivement l'un par rapport à l'autre des angles respectifs et des buses étant disposées au niveau des sections de rampe (9a, 9i, 9m), lesquelles buses étant reliées à des vannes pouvant être commandées et le système (10) présentant plusieurs moyens de détection et une unité de traitement de données, les moyens de détection étant conçus pour la détection de la position de travail des sections de rampe (9a, 9i, 9m) de la rampe distributrice (5), **caractérisé en ce que** l'unité de traitement de données est configurée de telle sorte que les signaux des moyens de détection peuvent être traités et des signaux de commande pour les vannes peuvent être générés sur leur base, la quantité d'épandage des buses pouvant être modifiée par l'intermédiaire des signaux de commande pour les vannes.

2. Véhicule (10) selon la revendication 1,
**caractérisé en ce que** la rampe distributrice (5) est subdivisée en largeurs partielles de travail et toutes les buses d'une largeur partielle de travail sont reliées à une vanne.

3. Véhicule (10) selon la revendication 1 ou 2,
**caractérisé en ce que** chaque buse est reliée respectivement à une vanne.

4. Véhicule (10) selon l'une des revendications précédentes,
**caractérisé en ce que** les buses sont reliées à des vannes pouvant fonctionner de manière modulée en largeur d'impulsion et/ou de manière modulée en fréquence.

5. Véhicule (10) selon l'une des revendications précédentes,
**caractérisé en ce que** la forme et/ou la grandeur des compartiments de pulvérisation des buses disposées au niveau de la rampe distributrice (5) peut/peuvent être enregistrée(s) et des signaux de commande pour les vannes peuvent être générés sur la base de la forme et/ou de la grandeur des compartiments de pulvérisation.

6. Véhicule (10) selon l'une des revendications précédentes,
**caractérisé en ce que** le système (10) présente des dispositifs de détection, qui sont conçus pour la détection des modifications de position et/ou des modifications de situation repliée des sections de rampe (9a, 9i, 9m) des bras latéraux (9a, 9b) et sur la base desquels les signaux de commande pour les vannes peuvent être générés.

7. Véhicule (10) selon l'une des revendications précédentes,
des informations concernant des zones déjà travaillées et/ou encore à travailler d'une surface utile agricole pouvant être enregistrées dans une mémoire,
**caractérisé en ce que** les signaux de commande pour des vannes peuvent être générés sur base de celles-ci.

8. Procédé destiné à commander et/ou à régler un véhicule utile agricole (1) selon l'une des revendications 1 à 7, le véhicule utile agricole (1) présentant une rampe distributrice (5) destinée à épandre du matériau, qui comprend deux bras latéraux (9a, 9b) comportant respectivement au moins une section de rampe (9a, 9i, 9m) mobile, les sections de rampe (9a, 9i, 9m) présentant au moins deux positions de travail, c'est-à-dire des positions et/ou des situations repliées, les sections de rampe d'un bras présentant respectivement l'une par rapport à l'autre et/ou les bras présentant respectivement l'un par rapport à l'autre des angles relatifs, et des buses étant disposées au niveau des sections de rampe (9a, 9i, 9m), lesquelles buses étant reliées à des vannes pouvant être commandées, comportant l'étape de :
- détection de la position de travail des sections de rampe (9a, 9i, 9m) de la rampe distributrice (5) ;
**caractérisé par les étapes de** :
- génération de signaux de commande pour les vannes sur la base de la position de travail détectée des sections de rampe (9a, 9i, 9m) ;
- modification de la quantité d'épandage des buses par l'intermédiaire des signaux de commande générés pour les vannes.

9. Procédé selon la revendication 8,
**caractérisé en ce que** la modification de la quantité d'épandage des buses par l'intermédiaire des signaux de commande générés pour les vannes est effectuée à l'aide d'une modulation en largeur d'impulsion et/ou d'une modulation en fréquence.

10. Procédé selon la revendication 8 ou 9,
**caractérisé en ce que** la génération de signaux de commande pour les vannes est effectuée sur la base de la forme et/ou de la dimension des compartiments de pulvérisation des buses disposées au niveau de la rampe distributrice (5).

11. Procédé selon l'une des revendications 8 à 10,
**caractérisé par l'étape de** :
- détection de modifications de position et/ou
de modifications de situation repliée des sections de rampe (9a, 9i, 9m) des bras latéraux (9a, 9b),
la génération de signaux de commande pour les vannes étant effectuée sur la base des modifications de position et/ou de modifications de situation repliée détectées des sections de rampe (9a, 9i, 9m) des bras latéraux (9a, 9b).

12. Procédé selon l'une des revendications 8 à 11,
**caractérisé en ce que** la génération de signaux de commande pour les vannes est effectuée sur la base d'informations concernant les zones déjà travaillées et/ou encore à travailler d'une surface utile agricole.
